# FASCICULE DE BREVET EUROPEEN

(11) **EP 2 988 364 B1**
(45) Date de publication et mention de la délivrance du brevet: **15.03.2017**
(21) Numéro de dépôt: 15178372.7
(22) Date de dépôt: 24.07.2015
(51) Int. Cl.: H01M 10/60

(54) **DISPOSITIF DE GESTION THERMIQUE DE PACK DE BATTERIES**
Thermische Steuervorrichtung für ein Batteriepack
Thermal Control Device for a Battery Pack

(30) Priorité: 18.08.2014 FR 1457853
(43) Date de publication de la demande: 24.02.2016
(73) Titulaire: Valeo Systemes Thermiques, 78320 Le Mesnil Saint Denis (FR)
(72) Inventeur: AZZOUZ, Kamel, 75012 Paris (FR); HERMANN, Pascale, 78490 Vicq (FR); MARCHADIER, Xavier, 78320 Levis Saint Nom (FR); MAHE, Christian, 78490 Le Tremblay sur Mauldre (FR); BIREAUD, Fabien, 78320 Le Mesnil Saint-Denis (FR)
(74) Mandataire: Metz, Gaëlle

(56) Documents cités:
- US-A1- 2010 151 307
- US-A1- 2010 151 309

## Description

La présente invention concerne la régulation thermique de batterie et plus particulièrement un dispositif de régulation thermique permettant à la fois le refroidissement et le réchauffage de batteries selon les conditions d'utilisations

La régulation thermique des batteries, notamment dans le domaine automobile et encore plus particulièrement des véhicules électriques et hybrides, est un point important car si les batteries sont soumises à des températures trop froides, leur autonomie peut décroitre fortement et si elles sont soumises à des températures trop importantes, il y a un risque d'emballement thermique pouvant aller jusqu'à la destruction de la batterie.

Afin de réguler la température des batteries, il est connu d'ajouter un dispositif de régulation de température du module batterie. Ces dispositifs utilisent généralement des fluides caloporteurs circulant, par exemple au moyen d'une pompe, dans un circuit de conduit, ledit circuit de conduit passant notamment sous ou à l'intérieur d'une plaque d'échange thermique en contact direct avec les batteries.

Les fluides caloporteurs peuvent ainsi absorber de la chaleur émise par la ou les batteries afin de les refroidir et évacuer cette chaleur au niveau d'un ou plusieurs échangeurs thermiques comme par exemple un radiateur ou un réfrigérant. Les fluides caloporteurs peuvent également, si besoin est, apporter de la chaleur pour réchauffer lesdites batteries, par exemple s'ils sont reliés à une résistance électrique ou à un chauffage par thermistance à Coefficient Positif de Température (CTP).

Les fluides caloporteurs généralement utilisés sont l'air ambiant ou des liquides comme par exemple l'eau. Les liquides étant meilleurs conducteurs de chaleur que les gaz, c'est une solution qui est privilégiée car plus efficace.

Néanmoins, l'utilisation du fluide caloporteur comme intermédiaire pour réchauffer les batteries n'est pas forcement suffisant pour réchauffer rapidement des batteries car il faut un certain temps avant que l'énergie calorifique passe vers le fluide calorifique et ensuite arrive aux batteries.

Un des buts de la présente invention est donc de résoudre au moins partiellement les inconvénients de l'art antérieur et de proposer un dispositif de gestion thermique dont le réchauffage des batteries est amélioré

La présente invention concerne donc un dispositif de gestion thermique de pack batteries destiné à être placé entre deux batteries, ledit dispositif de gestion thermique comportant à la fois un dispositif de refroidissement et un dispositif de chauffage placés côte à côte dans un espacement entre lesdites batteries, ledit dispositif de chauffage comportant au moins un élément chauffant et au moins un élément d'expansion qui, lorsque le au moins un élément chauffant est en fonctionnement, subit une dilatation thermique afin de plaquer le dispositif de chauffage contre les deux batteries simultanément et qui lorsque l'élément chauffant est à l'arrêt, se contracte de sorte que le dispositif de chauffage ne soit plus plaqué contre les deux batteries simultanément.

L'élément d'expansion, sous l'effet de la chaleur dégagée par le dispositif de chauffage, subit une dilatation thermique. Cette dilation thermique de l'élément d'expansion fait que le dispositif de chauffage vient se plaquer contre les batteries afin que les échanges de chaleurs soient les plus efficients possibles.

Selon un aspect de l'invention, lorsque l'espace entre les deux batteries dans lequel est placé le dispositif de chauffage est compris entre 1 et 3mm, ledit élément d'expansion est un matériau à changement de phase.

Selon un autre aspect de l'invention, lorsque l'espace entre les deux batteries dans lequel est placé le dispositif de chauffage est compris entre 3 et 5mm, ledit élément d'expansion est un ressort en acier inoxydable.

Selon un autre aspect de l'invention, lorsque l'espace entre les deux batteries dans lequel est placé le dispositif de chauffage est compris entre 3 et 5mm, ledit élément d'expansion est un ressort en acier inoxydable couplé avec un matériau à changement de phase.

Selon un autre aspect de l'invention, le dispositif de chauffage comporte un élément chauffant placé entre deux dispositifs de pression.

Selon un autre aspect de l'invention, le dispositif de chauffage comporte un élément d'expansion placé entre deux éléments chauffant.

Selon un autre aspect de l'invention, le dispositif de refroidissement comporte au moins deux tubes plats placés entre deux batteries et au contact des ces dernières, le dispositif de chauffage étant placé entre lesdits tubes plats également au contact des batteries.

Selon un autre aspect de l'invention, l'élément chauffant est rendu solidaire des tubes plats

Selon un autre aspect de l'invention, l'élément chauffant est un chauffage électrique par résistance sérigraphiée.

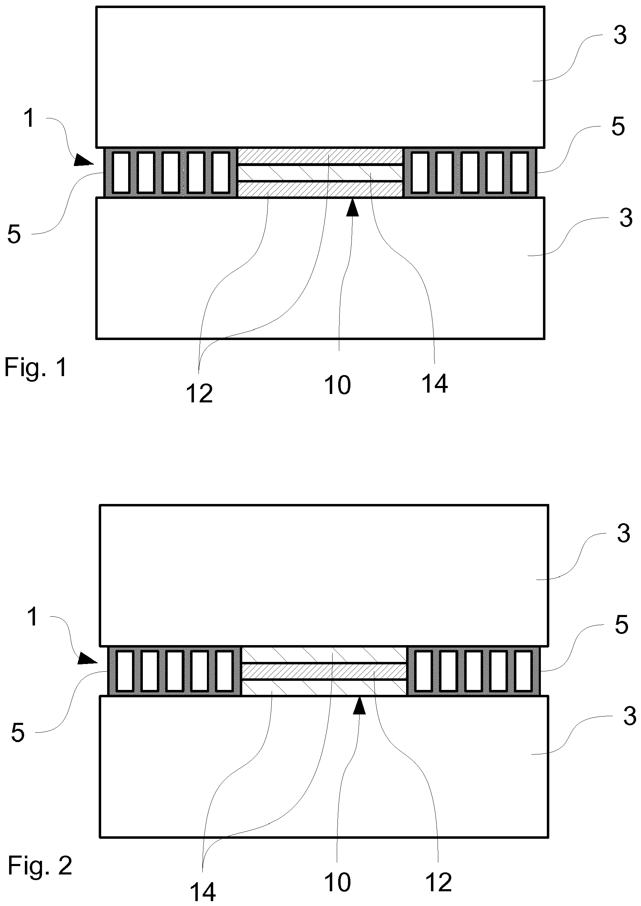

D'autres caractéristiques et avantages de l'invention apparaîtront plus clairement à la lecture de la description suivante, donnée à titre d'exemple illustratif et non limitatif, et des dessins annexés parmi lesquels les figures 1 et 2 montrent des représentations schématiques de dispositifs de gestions thermiques de pack batteries selon deux modes de réalisations.

Les éléments identiques sur les différentes figures, portent les mêmes références.

Comme montré sur les différentes figures, le dispositif de gestion thermique 1 de pack batteries est placé entre deux batteries 3. Il comporte à la fois un dispositif de refroidissement 5 et un dispositif de chauffage 10, tout deux placés côte à côte dans un espacement entre les deux batteries 3.

Le dispositif de refroidissement 5 permet un refroidissement des batteries 3 lorsque ces dernières sont utilisées afin de les maintenir à une température optimale de fonctionnement. Le dispositif de refroidissement 5 peut par exemple comporter au moins deux tubes plats placés entre deux batteries 3 et au contact des ces dernières. Le dispositif de chauffage 10 est alors de préférence placé entre lesdits tubes plats, également au contact des batteries 3.

Le dispositif de chauffage 10 permet quant à lui de réchauffer les batteries 3 afin qu'elles atteignent leur température optimale de fonctionnement, par exemple lors d'un démarrage par temps froid.

Le dispositif de chauffage 10 comporte au moins un élément chauffant 12 et au moins un élément d'expansion 14. L'élément d'expansion 14, sous l'effet de la chaleur dégagée par le dispositif de chauffage 10, subit une dilatation thermique. Cette dilation thermique de l'élément d'expansion 14 fait que le dispositif de chauffage 10 vient se plaquer contre les deux batteries 3 simultanément afin que les échanges de chaleurs soient les plus efficients possibles. L'élément chauffant 12 peut être un élément chauffant électrique de faible épaisseur comme un chauffage électrique par résistance sérigraphiée.

Lors du refroidissement des batteries 3 par le dispositif de refroidissement 5, et lorsque l'élément chauffant 12 est à l'arrêt, l'élément d'expansion 14 se contracte ce qui diminue le contact entre les batteries 3 et le dispositif de chauffage 10 de sorte que le dispositif de chauffage 10 ne soit plus plaqué contre les deux batteries 3 simultanément.

Selon l'espace disponible entre les deux batteries 3, la nature de l'élément d'expansion 14 peut varier. Ainsi, lorsque l'espacement entre les deux batteries 3 dans lequel est placé le dispositif de chauffage 10 est compris entre 1 et 3mm, l'élément d'expansion 14 comprend un matériau à changement de phase.

Lorsque l'espacement entre les deux batteries 3 est compris entre 3 et 5mm, l'élément d'expansion 14 comprend alors un ressort en acier inoxydable. En effet, pour un tel espace entre les deux batteries 3, la dilatation thermique seule d'un matériau à changement de phase n'est pas suffisante.

Le ressort en acier inoxydable peut par exemple être une plaque d'acier inoxydable longitudinale comportant des bras déformables obtenus respectivement par une découpe et un pliage de ladite plaque d'acier inoxydable longitudinale.

Le ressort en acier inoxydable peut également être une lame sinusoïdale.

De préférence, le ressort est une unique lame déformable de section transversale sensiblement en V, avec des parties d'extrémités courbées et une partie sommitale de jonction des branches du V incurvées.

Le fait d'utiliser de l'acier inoxydable permet également la formation d'un pont thermique entre la batterie 3 et le dispositif de chauffage 10.

Toujours dans cet intervalle d'espace, l'élément d'expansion 14 peut également être un ressort en acier inoxydable couplé avec un matériau à changement de phase.

Pour cela, le matériau à changement de phase peut être par exemple collé directement au ressort en acier inoxydable.

Le couplage peut également s'effectuer via un moyen formant support, par exemple une matrice composite dans laquelle est ménagée une cavité contenant en tout ou partie le matériau à changement de phase, cette matrice composite étant elle-même couplée au ressort en acier inoxydable, par exemple par collage

Dans le cas d'un matériau à changement de phase, la variation de volume et donc la capacité à permettre un plaquage contre les batteries 3 est fonction de la variation de volume due au changement de phase (de l'ordre de 10 à 15% selon les types de matériau à changement de phase) ainsi qu'au coefficient de dilatation thermique du matériau en lui-même.

Dans le cas d'un un ressort en acier inoxydable, la variation de volume et donc la capacité à permettre un plaquage contre les batteries 3 est fonction uniquement du coefficient de dilatation thermique du matériau en lui-même. Cependant pour un espace compris entre 1 et 3mm un ressort mécanique ne peut être mis en oeuvre.

Selon un premier mode de réalisation illustré à la figure 1, le dispositif de chauffage 10 du dispositif de gestion thermique 1 peut comporter un élément d'expansion 14 placé entre deux éléments chauffant 12. Dans ce mode de réalisation, l'élément d'expansion 14 écarte ou rapproche les éléments chauffant 12 qui peuvent venir directement au contact des batteries 3.

Selon un second mode de réalisation illustré à la figure 2, le dispositif de chauffage 10 du dispositif de gestion thermique 1 peut comporter un élément chauffant 12 placé entre deux dispositifs de pression 14. Dans ce mode de réalisation, l'élément chauffant 12 est immobile, les deux dispositifs de pression 14 venant alors au contact des batteries 3. Dans ce cas, l'élément chauffant 12 est mécaniquement rendu solidaire par soudage auxdits dispositifs de refroidissement 5 adjacents de sorte que l'ensemble constitué des dispositifs de chauffage 10 et de refroidissement 5 est réalisé d'un seul tenant.

Ainsi, on voit bien que du fait de la présence d'au moins un élément d'expansion 14, le dispositif de chauffage 10 a une efficacité accrue. En effet, lors du chauffage, le contact entre ledit dispositif de chauffage 10 et les batteries 3 est optimale du fait de la dilation thermique de l'élément d'expansion 14. Lors du refroidissement des batteries 3, l'élément d'expansion 14 se rétracte du fait du froid et le contact entre le dispositif de chauffage 10 et les batteries 3 est moindre.

## Revendications

1. Dispositif de gestion thermique (1) de pack batteries destiné à être placé entre deux batteries (3), ledit dispositif de gestion thermique (1) comportant à la fois un dispositif de refroidissement (5) et un dispositif de chauffage (10) placés côte à côte dans un espacement entre lesdites batteries (3), **caractérisé en ce que** ledit dispositif de chauffage (10) comporte au moins un élément chauffant (12) et au moins un élément d'expansion (14) qui, lorsque le au moins un élément chauffant (12) est en fonctionnement, subit une dilatation thermique afin de plaquer le dispositif de chauffage (10) contre les deux batteries (3) simultanément et qui lorsque l'élément chauffant (12) est à l'arrêt, se contracte de sorte que le dispositif de chauffage (10) ne soit plus plaqué contre les deux batteries (3) simultanément.

2. Dispositif de gestion thermique (1) selon la revendication précédente, **caractérisé en ce que** l'espacement entre les deux batteries (3) dans lequel est placé le dispositif de chauffage (10) est compris entre 1 et 3mm et que ledit élément d'expansion (14) est un matériau à changement de phase.

3. Dispositif de gestion thermique (1) selon la revendication 1, **caractérisé en ce que** l'espacement entre les deux batteries (3) dans lequel est placé le dispositif de chauffage (10) est compris entre 3 et 5mm et que ledit élément d'expansion (14) est un ressort en acier inoxydable.

4. Dispositif de gestion thermique (1) selon la revendication 1, **caractérisé en ce que** l'espacement entre les deux batteries (3) dans lequel est placé le dispositif de chauffage (10) est compris entre 3 et 5mm et que ledit élément d'expansion (14) est un ressort en acier inoxydable couplé avec un matériau à changement de phase.

5. Dispositif de gestion thermique (1) selon l'une quelconque des revendications 1 à 4, **caractérisé en ce que** le dispositif de chauffage (10) comporte un élément chauffant (12) placé entre deux éléments d'expansion (14).

6. Dispositif de gestion thermique selon l'une quelconque des revendications 1 à 4, **caractérisé en ce que** le dispositif de chauffage (10) comporte un élément d'expansion (14) placé entre deux éléments chauffant (12).

7. Dispositif de gestion thermique (1) selon l'une quelconque des revendications précédentes, **caractérisé en ce que** le dispositif de refroidissement (5) comporte au moins deux tubes plats placés entre deux batteries (3) et au contact des ces dernières, le dispositif de chauffage (10) étant placé entre lesdits tubes plats également au contact des batteries (3).

8. Dispositif de gestion thermique (1) selon la revendication 5 en combinaison avec la revendication 7, **caractérisé en ce que** l'élément chauffant (12) est rendu solidaire des tubes plats.

9. Dispositif de gestion thermique (1) selon l'une quelconque des revendications précédentes, **caractérisé en ce que** l'élément chauffant (12) est un chauffage électrique par résistance sérigraphiée.

## Patentansprüche

1. Temperatursteuerungsvorrichtung (1) für ein Batteriepack, die dazu bestimmt ist, zwischen zwei Batterien (3) angeordnet zu werden, wobei die Temperatursteuerungsvorrichtung (1) zugleich eine Kühlvorrichtung (5) und eine Heizvorrichtung (10) umfasst, die nebeneinander in einem Zwischenraum zwischen den Batterien (3) angeordnet sind, **dadurch gekennzeichnet, dass** die Heizvorrichtung (10) wenigstens ein Heizelement (12) und wenigstens ein Expansionselement (14) umfasst, das, wenn das wenigstens eine Heizelement (12) in Betrieb ist, eine Wärmeausdehnung erfährt, um die Heizvorrichtung (10) gleichzeitig gegen die zwei Batterien (3) zu drücken, und das sich, wenn das Heizelement (12) angehalten ist, zusammenzieht, so dass die Heizvorrichtung (10) nicht mehr gleichzeitig gegen die zwei Batterien (3) gedrückt wird.

2. Temperatursteuerungsvorrichtung (1) nach dem vorhergehenden Anspruch, **dadurch gekennzeichnet, dass** der Zwischenraum zwischen den zwei Batterien (3), in dem die Heizvorrichtung (10) angeordnet ist, zwischen 1 und 3 mm beträgt und dass das Expansionselement (14) ein Phasenwechselmaterial ist.

3. Temperatursteuerungsvorrichtung (1) nach Anspruch 1, **dadurch gekennzeichnet, dass** der Zwischenraum zwischen den zwei Batterien (3), in dem die Heizvorrichtung (10) angeordnet ist, zwischen 3 und 5 mm beträgt und dass das Expansionselement (14) eine Feder aus rostfreiem Stahl ist.

4. Temperatursteuerungsvorrichtung (1) nach Anspruch 1, **dadurch gekennzeichnet, dass** der Zwischenraum zwischen den zwei Batterien (3), in dem die Heizvorrichtung (10) angeordnet ist, zwischen 3 und 5 mm beträgt und dass das Expansionselement (14) eine Feder aus rostfreiem Stahl ist, die mit einem Phasenwechselmaterial gekoppelt ist.

5. Temperatursteuerungsvorrichtung (1) nach einem der Ansprüche 1 bis 4, **dadurch gekennzeichnet, dass** die Heizvorrichtung (10) ein Heizelement (12) umfasst, das zwischen zwei Expansionselementen (14) angeordnet ist.

6. Temperatursteuerungsvorrichtung nach einem der Ansprüche 1 bis 4, **dadurch gekennzeichnet, dass** die Heizvorrichtung (10) ein Expansionselement (14) umfasst, das zwischen zwei Heizelementen (12) angeordnet ist.

7. Temperatursteuerungsvorrichtung (1) nach einem der vorhergehenden Ansprüche, **dadurch gekennzeichnet, dass** die Kühlvorrichtung (5) wenigstens zwei Flachrohre umfasst, die zwischen zwei Batterien (3) und in Kontakt mit diesen angeordnet sind, wobei die Heizvorrichtung (10) zwischen den Flachrohren ebenfalls in Kontakt mit den Batterien (3) angeordnet ist.

8. Temperatursteuerungsvorrichtung (1) nach Anspruch 5 in Kombination mit Anspruch 7, **dadurch gekennzeichnet, dass** das Heizelement (12) mit den Flachrohren fest verbunden ist.

9. Temperatursteuerungsvorrichtung (1) nach einem der vorhergehenden Ansprüche, **dadurch gekennzeichnet, dass** das Heizelement (12) eine elektrische Heizung durch Siebdruckwiderstand ist.

## Claims

1. Thermal control device (1) for battery packs intended to be placed between two batteries (3), said thermal control device (1) comprising both a cooling device (5) and a heating device (10) placed side-by-side in a space between said batteries (3), **characterized in that** said heating device (10) comprises at least one heating element (12) and at least one expansion element (14) which, when the at least one heating element (12) is operating, undergoes a thermal expansion in order to press the heating device (10) against the two batteries (3) simultaneously and which, when the heating element (12) is off, contracts such that the heating device (10) is no longer pressed against the two batteries (3) simultaneously.

2. Thermal control device (1) according to the preceding claim, **characterized in that** the space between the two batteries (3) in which the heating device (10) is placed is between 1 and 3 mm and that said expansion element (14) is a phase change material.

3. Thermal control device (1) according to Claim 1, **characterized in that** the space between the two batteries (3) in which the heating device (10) is placed is between 3 and 5 mm and that said expansion element (14) is a stainless steel spring.

4. Thermal control device (1) according to Claim 1, **characterized in that** the space between the two batteries (3) in which the heating device (10) is placed is between 3 and 5 mm and that said expansion element (14) is a stainless steel spring coupled with a phase change material.

5. Thermal control device (1) according to any one of Claims 1 to 4, **characterized in that** the heating device (10) comprises a heating element (12) placed between two expansion elements (14).

6. Thermal control device (1) according to any one of Claims 1 to 4, **characterized in that** the heating device (10) comprises an expansion element (14) placed between two heating elements (12).

7. Thermal control device (1) according to any one of the preceding claims, **characterized in that** the cooling device (5) comprises at least two flat tubes placed between two batteries (3) and in contact therewith, the heating device (10) being placed between said flat tubes also in contact with the batteries (3).

8. Thermal control device (1) according to Claim 5 in combination with Claim 7, **characterized in that** the heating element (12) is secured to the flat tubes.

9. Thermal control device (1) according to any one of the preceding claims, **characterized in that** the heating element (12) is a screen-printed resistor-based electric heating.
